(19) **Europäisches Patentamt European Patent Office Office européen des brevets**

(11) **EP 3 986 818 B1**

(12) **EUROPEAN PATENT SPECIFICATION**

(45) Date of publication and mention of the grant of the patent:
**02.08.2023 Bulletin 2023/31**

(51) International Patent Classification (IPC):
**B65H 63/00** (2006.01)   **G01N 21/25** (2006.01)
**G01J 3/02** (2006.01)   **G01J 3/50** (2006.01)
**G01N 21/89** (2006.01)   **G01N 21/952** (2006.01)
**G01N 21/31** (2006.01)

(21) Application number: **20743286.5**

(22) Date of filing: **18.06.2020**

(52) Cooperative Patent Classification (CPC):
**B65H 63/006; G01J 3/0202; G01J 3/0237; G01J 3/501; G01N 21/251; G01N 21/31;** B65H 2701/31; G01N 21/8915; G01N 21/952; G01N 2021/3155; G01N 2021/3181

(86) International application number:
**PCT/IB2020/055679**

(87) International publication number:
**WO 2020/254996 (24.12.2020 Gazette 2020/52)**

(54) **DEVICE AND RELATED METHOD FOR THE AUTOMATIC CONTROL OF THE COLOR TONE OF A REEL OF THREAD**

VORRICHTUNG UND ZUGEHÖRIGES VERFAHREN ZUR AUTOMATISCHEN STEUERUNG DES FARBTONS EINER FADENROLLE

DISPOSITIF ET PROCÉDÉ ASSOCIÉ POUR LA COMMANDE AUTOMATIQUE DE LA TONALITÉ DE COULEUR D'UNE BOBINE DE FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2019 IT 201900009636**

(43) Date of publication of application:
**27.04.2022 Bulletin 2022/17**

(73) Proprietor: **THEMA 2 S.R.L.**
**46024 Moglia (MN) (IT)**

(72) Inventors:
• **MICHELINI, Claudio**
  **46024 Moglia, Mantova (IT)**
• **BARALDI, Stefano**
  **46024 Moglia, Mantova (IT)**
• **ROSSI, Alessandra**
  **46024 Moglia, Mantova (IT)**
• **GUERZONI, Giovanni**
  **46024 Moglia, Mantova (IT)**
• **SPOLLON, Luciano**
  **46024 Moglia, Mantova (IT)**

(74) Representative: **Gualeni, Nadia**
**Jacobacci & Partners S.p.A.**
**Piazza della Vittoria, 11**
**25122 Brescia (IT)**

(56) References cited:
**EP-A2- 0 603 877**   **JP-A- S 641 939**
**JP-A- 2007 002 363**   **US-A- 5 289 983**
**US-A- 5 636 803**   **US-A1- 2018 328 789**
**US-B1- 9 243 953**

## Description

It is the object of the present invention a device for automatically reading the color tone of a reel of textile thread (for example, for fabrics or ropes), and a related classification method.

In the textile field, the responsibility for the quality control of the thread produced rests with the supplier, who in practice indicates a sample of thread as the reference for the color tone of the whole subsequent production. The mismatch between the actual tone of the fabric produced and the sample tone translates into penalties for the yarn supplier.

In fact, the non-uniformity of the color of the reels of thread used, by way of explanation but not by way of limitation, for the production of a fabric is clearly visible in the final fabric, which has darker or lighter linings with respect to the base color.

Currently, the control of the color tone of the reels of thread is entrusted to the experience of specialized operators, who carry it out in a completely manual manner, i.e., the reel is placed in full daylight, in a well-lit room, and compared with the naked eye against a reference sample, or fabric samples are produced alternatively woven with a few centimeters of sample thread alternating with a few centimeters of single numbered reels of thread to be compared with the sample reel itself, the comparison being always performed with the naked eye. It is clear that the assessment of the operator, although specialized, is still rather subjective and therefore a source of errors. It has been noted that statistically, following a shift and therefore an operator change, the verification of the color tone may give very different results.

US 5 636 803 A discloses a device according to the preamble of claim 1.

It is the object of the present invention to solve the above issues.

Such an object is achieved by a device for the automatic control of the color tone of a reel of thread in accordance with claim 1, and by a related color tone classification method in accordance with claim 9. The dependent claims describe preferred embodiments of the invention.

The features and advantages of the device according to the present invention will be evident from the following description, given by way of explanation and not by way of limitation in accordance with the attached Figures, in which:

- Figures 1A and 1B respectively show a front view and an axonometric view of a device for the automatic control of the color tone according to the present invention;

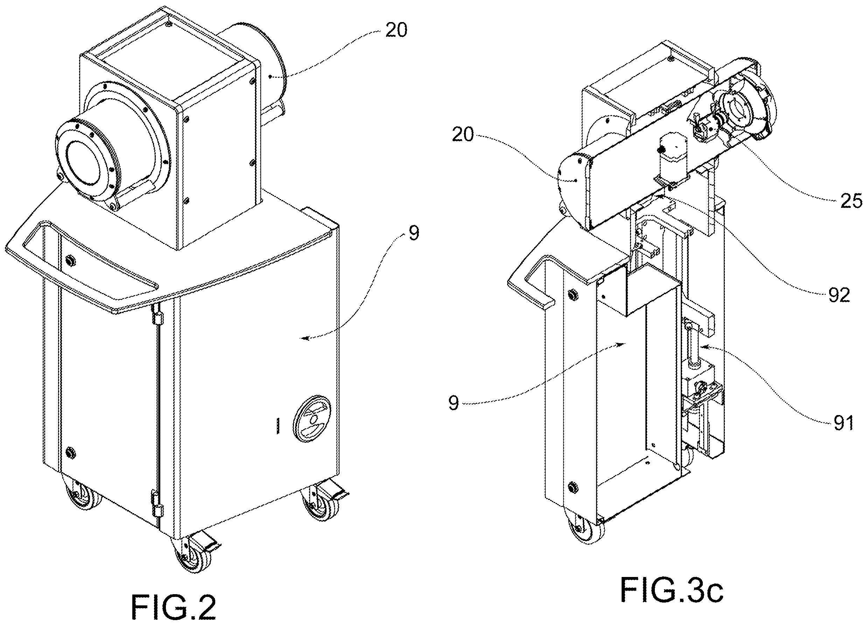

- Figure 2 shows a component of the device of Figure 1, in particular, it shows the color measuring device in an axonometric view;

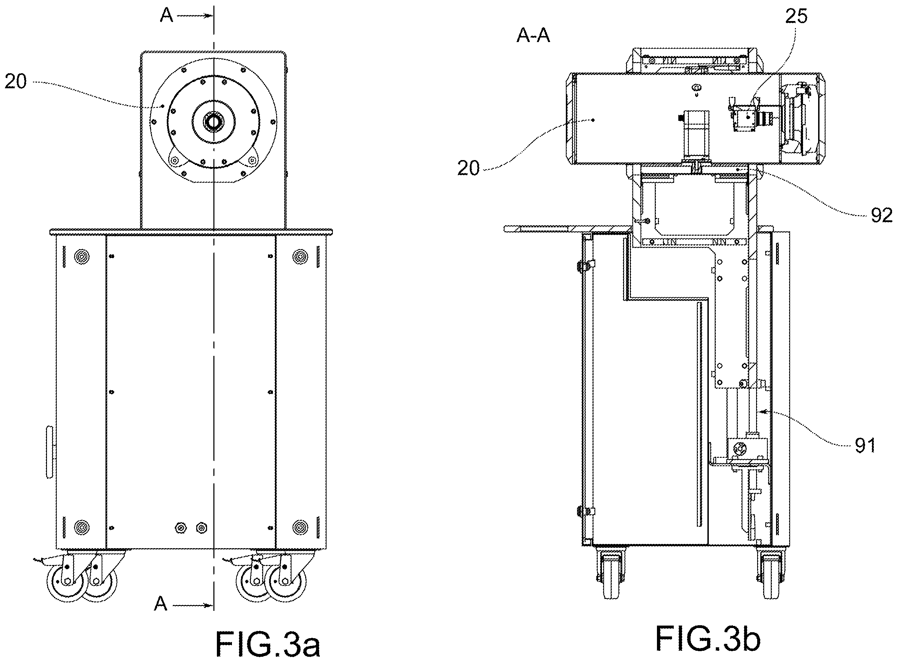

- Figures 3A, 3B and 3C respectively show a front view, a sectional view, and an axonometric sectional view of the color measuring device of Figure 2.

With reference to the accompanying Figures, reference numeral 1 overall indicates a device for the automatic control of the color tone of a reel of thread.

The device 1 comprises a frame 11 which supports an arm 10 on which it is possible to place a reel of thread 5 to be analyzed.

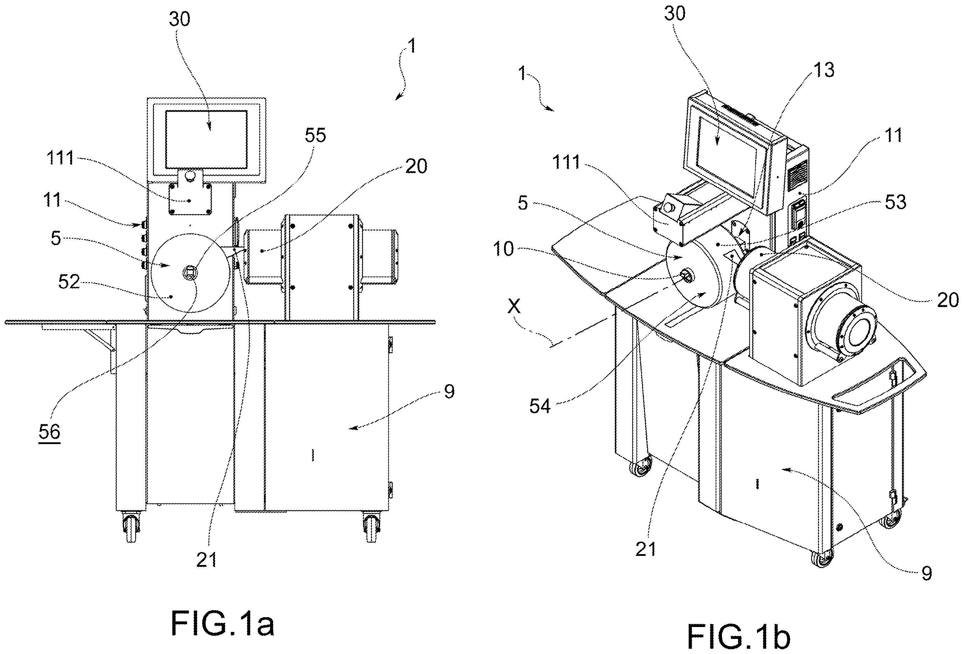

The reel of thread 5, visible for example in Figure 1, consists of thread wound on a reel 55. Looking at the reel of thread 5 from the front, it may be noticed that the wound thread forms a body 52 for which it is possible to define a cylindrical portion 53, interposed between two tapered portions 54. Looking at the reel from the side, the reel 55, provided with a hole 56 for loading the reel of thread 5 on the arm 10 of the device 1 for the automatic control of the color tone, is visible.

The arm 10 is equipped with a rear shoulder 13, adapted to make an abutment for the reel 55 of the reel of thread 5. The presence of the rear shoulder 13 allows positioning the reel of thread 5 in the correct position for the measurement step.

The device 1 comprises at least one color measuring device 20, adapted to project a measuring beam 21 onto the reel of thread 5. In particular, the meter 20 projects a measuring beam 21 at the arm 10, so that, when the reel of thread 5 is loaded onto the arm 10, the measuring beam 21 intercepts the center line of the cylindrical portion 53 of the reel of thread.

Having defined as X the longitudinal axis of development of the arm 10, the meter 20 projects the measuring beam 21 orthogonally with respect to the axis (X).

Preferably, the meter 20 is positioned on a carriage 9 which is separable from the frame 11. The meter 20 is connected to a computer (not shown) provided with a screen 30 with a graphical user interface.

Preferably, the meter 20 is provided with vertical movement means 91, adapted to lift and lower the meter with respect to the arm 10 along the vertical axis.

Preferably, the meter 20 is provided with horizontal movement means 92, adapted to move the meter closer and further away with respect to the arm 10 along a horizontal axis.

The meter 20 allows obtaining the difference in tone of the reel under observation (target reel) with respect to a reference sample (sample reel). In particular, the meter 20 performs a multispectral analysis of the reel of thread 5, using a camera and an illuminator, suitably synchronized with the reading of the camera. It should be noted that the camera allows capturing images (up to eight) with the sample illuminated with eight types of light at various frequencies in the visible (UV light, BLUE light, GREEN light, REDDISH PURPLE light, RED light, INFRA RED light, FAR RED light, WHITE light).

The meter 20 therefore comprises a camera 25 and an illuminator, positioned aligned with the camera 25.

According to the invention, the camera is high resolution monochrome.

Preferably, the illuminator is multispectral with eight built-in LEDs, each adapted to illuminate the target with a specific wavelength.

The meter 20, as a result of the measurement, provides a number which considers together the average intensity of the color of the target reel of thread 5, photographed for all the eight wavelengths emitted. If the eight results are all 0, it means that all the pixels with each light emitted are saturated with black. If the 8 results are all 255, it means that all the pixels with each light emitted are saturated with white.

An eight-dimensional space was thus defined (one dimension for each wavelength emitted) with the same properties as a Euclidean space. Two reference points are defined in such an eight-dimensional space:

- a midpoint, which has as coordinates the eight average saturations measured for the reference sample (sample reel);
- a black point, corresponding to the black saturation point.

The measurement on the reel under analysis (target reel) is calculated as the distance with respect to the midpoint and to the black point.

In detail, therefore, having obtained the eight average saturations as measurement, they are considered as coordinates of a point.

P = (s1, s2, s3, s4, s5, s6, s7, s8)
s1 = average saturation with UV light
s2 = average saturation with BLUE light
s3 = average saturation with GREEN light
s4 = average saturation with REDDISH PURPLE light
s5 = average saturation with RED light
s6 = average saturation with INFRA RED light
s7 = average saturation with FAR RED light
s8 = average saturation with WHITE light

From which the distance from the black point (i.e., from the point completely saturated to black) is obtained, calculated as the norm of the point:

$$\|P\| = \sqrt{\sum_{n=1}^{8}(s_n^2)}$$

This result numerically expresses how intense the color observed by the meter is.

This is a number ranging from 0.0 to 721.25, and the unit of measurement is referred to as "are". By definition, therefore, the distance between a black color sample at all illuminations and a white color sample at all illuminations is 721.25 "ares".

It is also the object of the invention a method for the automatic control of the color tone of a reel of thread.

The method involves an initial step of setting the reference color, i.e., the acquisition of a color sample parameter (sample reel). Such a step involves loading a sample reel of thread onto the arm 10 of the device 1 and projecting the measuring beam 21 on a cylindrical portion 53 of the reel. The meter detects the eight average saturations of the reference sample (sample reel) and calculates the "midpoint" and "black point" reference points.

Once the setting has been completed, the method involves a step of measuring the color of the reel, i.e., acquiring the color of the reel to be classified. Such a step involves loading the reel of thread to be classified onto the arm 10 of the device 1 and projecting the measuring beam 21 on a cylindrical portion 53 of the reel. The meter detects the eight average saturations of the target reel of thread.

At this point the eight average saturations of the target reel are classified by comparison with the "midpoint" and "black point" and the measurement on the reel is calculated as the distance with respect to the midpoint and the black point.

Thereby, it is possible to accurately establish the correspondence of the "reel color" with the "sample color", and, in case of mismatch, have an indication of how much lighter or darker the "reel color" is compared to the "sample color".

Therefore, the color acquisition step (both of the sample reel and of the reel to be classified) occurs on the basis of illumination with eight types of light at various frequencies in the visible (UV light, BLUE light, GREEN light, REDDISH PURPLE light, RED light, INFRA RED light, FAR RED light, WHITE light).

Preferably, the device 1 further allows the classification of the reels of thread 5 on the basis of weight (gr), diameter (mm) and density (gr/cm3).

Preferably, the device 1 comprises, at the arm 10, a load cell for measuring the weight of the reel of thread 5 once the latter is positioned on the arm 10.

Preferably, the device 1 comprises a bridge 111, fastened to the frame 11, arranged above the arm 10. Preferably, the bridge 111 extends beyond the arm 10. The bridge 111 is provided with a longitudinal rail along which a detector slides. Such a detector is capable of projecting a detection beam onto the reel of thread 5. In particular, the detector projects a detection beam at the arm 10, so that, when the reel of thread 5 is loaded onto the arm 10, the measuring beam 21 intercepts the body 52 of the reel of thread. Since the detector is slidable along the rail, it is capable of projecting the detection beam along the whole body 52 of the reel of thread (i.e., both along the cylindrical portion 53 and along the tapered portions 54). Advantageously, therefore, the detector is capable of detecting the exact geometry of the reel of thread loaded onto the arm 10.

The reel classification method, based on weight (gr), diameter (mm) and density (gr/cm3), comprises the steps of:

- loading the reel of thread 5 onto the arm 10, provided with a load cell;
- measuring the weight: detection of the gross weight of the reel of thread loaded on the arm 10, calculation of the net weight of the thread by subtracting the weight of the reel 55;
- measuring the volume: activation of the detector, sliding along the rail, and recording of a plurality of geometry measurements of the reel, calculation of the total volume of the reel, calculation of the net volume of the thread by subtracting the volume of the reel 55:
- measuring the density: calculation of the density of the thread based on the weight and volume previously recorded.

At this point, the weight, volume, and density values are classified in comparison with previously set reference values.

Advantageously, the measurement of the volume of the reel of thread 5, and in particular the measurement of the diameter, is used by the meter 20 to center the focus (autofocus) on the center line of the cylindrical portion 53 of the reel of thread.

It is therefore evident that the method for the automatic classification of the color tone of a reel of thread in accordance with the present invention, returns to the operator, in a convenient single number, the result of an in-depth analysis of the color of the target.

Furthermore, since the automatic classification of the color tone is based on the analysis of how the target color responds to all possible light sources, the resulting measurement is extremely precise.

Innovatively, a device for the automatic control of the color tone of a reel of thread, and a related classification method in accordance with the present invention, allows the measurements taken on the reel to be objective, and therefore to make the classification objective and error-free.

Advantageously, therefore, the device and method described herein allow the measurement and the classification of the reels of thread to be fully automatic, with the dual purpose of ensuring absolute objectivity in the assessment and of reducing the cost of the labor used for the control itself and especially for all the possible, rather expensive, complaints resulting from subjective assessments of the quality of the reels of thread. Such an aspect is very important, especially for high-end product categories.

Advantageously, therefore, the device and method described herein have the following technical advantages:

- they allow excluding the impact of external light sources, which therefore do not affect the measurement;
- they allow excluding the effects due to the surface roughness of the reel of thread, which therefore do not affect the measurement;
- they allow excluding the effects due to the geometry of the reel of thread, which therefore do not affect the measurement;
- they allow for an automatic positioning with AutoFocus.

It is apparent that those skilled in the art may modify the object described above, without departing from the scope of protection as defined by the following claims.

**Claims**

1. Device (1) for the automatic control of the color tone of a reel of thread, comprising:

   - a frame (11) which supports an arm (10) on which a reel of thread (5) can be placed;
   - a color measuring device (20) adapted to project a measuring beam (21) onto a cylindrical portion (53) of the reel of thread (5), said measuring device (20) comprising a camera (25) and an illuminator aligned with the camera (25), said illuminator being multispectral and adapted to illuminate the reel of thread (5) with different wavelengths;
   - a computer provided with a screen (30) with graphic interface and connected to the meter (20), adapted to process the classification of the reel of thread (5) loaded on the arm (10) on the basis of the measurements made by the meter (20),

   **characterized in that** the camera is high resolution monochrome.

2. Device (1) according to claim 1, wherein the multispectral illuminator comprises eight LEDs, and each of them projects a light at a precise frequency in the visible.

3. Device (1) according to claim 2, wherein the multispectral illuminator projects: UV light, BLUE light, GREEN light, AMARANTO light, RED light, INFRA RED light, FAR RED light, WHITE light.

4. Device (1) according to any one of the preceding claims, wherein the meter (20) is provided with vertical movement means (91), adapted to lift and lower it with respect to the arm (10) along a vertical axis, and/or horizontal movement means (92), adapted to move it closer and further away from the arm (10) along a horizontal axis.

5. Device (1) according to any one of the preceding claims, wherein the meter (20) is arranged on a carriage (9) separable from the frame (11).

6. Device (1) according to any one of the preceding claims, wherein, having defined (X) the longitudinal axis of development of the arm (10), the measuring device (20) projects the measuring beam (21) orthogonally with respect to the axis (X), so as to center the center line of the cylindrical portion (53) of the reel of thread.

7. Device (1) according to any one of the preceding claims, comprising, at the arm (10), a load cell (7) adapted to detect the weight of the reel of thread (5) loaded on the arm (10).

8. Device (1) according to any one of the preceding claims, comprising a bridge (111), fixed to the frame (11) and above the arm (10), provided with a rail (112) on which a detector (40) slides, adapted to project a detection beam on the body (52) of the reel of thread (5) loaded on the arm (10), to detect the volume thereof.

9. Method for the automatic control of the color tone of a reel of thread, comprising the steps of:

- providing a device (1) for the automatic control of the color tone of a reel of thread, according to claim 1;
- setting the reference color:
- loading a sample reel of thread onto the arm (10) of the device (1) and projecting the measuring beam (21) on a cylindrical portion (53) of the reel;
- detecting through the meter (20) eight average saturations, one for each light frequency:

$S1$ = average saturation with UV light
$S2$ = average saturation with BLUE light
$S3$ = average saturation with GREEN light
$S4$ = average saturation with REDDISH PURPLE light
$S5$ = average saturation with RED light
$S6$ = average saturation with INFRA RED light
$S7$ = average saturation with FAR RED light
$S8$ = average saturation with WHITE light

- defining "sample color" the point having coordinates ($S1$, $S2$, $S3$, $S4$, $S5$, $S6$, $S7$, $S8$);
- measuring the color of the reel (5) to be analyzed:
- loading the reel of thread (5) to be analyzed onto the arm (10) of the device (1) and projecting the measuring beam (21) on a cylindrical portion (53) of the reel;
- detecting through the meter (20) eight average saturations, one for each light frequency:

$s1$ = average saturation with UV light
$s2$ = average saturation with BLUE light
$s3$ = average saturation with GREEN light
$s4$ = average saturation with REDDISH PURPLE light
$s5$ = average saturation with RED light
$s6$ = average saturation with INFRA RED light
$s7$ = average saturation with FAR RED light
$s8$ = average saturation with WHITE light

- defining "reel color" the point having coordinates ($s1$, $s2$, $s3$, $s4$, $s5$, $s6$, $s7$, $s8$);
- classifying the color of the reel as the distance of the "reel color" point with respect to the "sample color" point.

10. Method according to claim 9, further comprising the step of classifying the reel of thread (5) on the basis of weight, diameter and density, wherein this step provides for:

- providing a device (1) according to claims 7 and 8;
- measuring the weight: measuring the weight of the reel of thread loaded on the arm (10) through the load cell (7), calculating the net weight of the thread by subtracting the weight of the reel (55);
- measuring the volume: activating the detector (40), sliding along the rail (112), and recording a plurality of geometry measurements of the reel, calculating the total volume of the reel, calculating the net volume of the thread by subtracting the volume of the reel (55);
- measuring the density: calculating the density of the thread based on the net weight and net volume previously recorded.

11. Method according to claim 10, wherein the geometry measurements detected during the volume measurement are used to achieve the focusing of the meter (20) and/or the centering of the measuring beam (21) with respect to the axis center line of the cylindrical portion (53) of the reel of thread (5) loaded on the arm (10).

**Patentansprüche**

1. Vorrichtung (1) zur automatischen Steuerung des Farbtons einer Garnrolle, aufweisend:

- einen Rahmen (11), der einen Arm (10) trägt, auf dem eine Garnrolle (5) angeordnet werden kann;

- eine Farbmessvorrichtung (20), die derart eingerichtet ist, dass sie einen Messstrahl (21) auf einen zylindrischen Abschnitt (53) der Garnrolle (5) projiziert, wobei die Messvorrichtung (20) eine Kamera (25) und eine mit der Kamera (25) ausgerichtete Beleuchtungseinrichtung aufweist, wobei die Beleuchtungseinrichtung multispektral ist und eingerichtet ist, die Garnrolle (5) mit unterschiedlichen Wellenlängen zu beleuchten;

- einen Computer, der mit einem Bildschirm (30) mit grafischer Benutzeroberfläche versehen ist, und der mit dem Messgerät (20) verbunden ist, welcher eingerichtet ist, die Klassifizierung der auf den Arm (10) geladenen Garnrolle (5) auf Grundlage der durch das Messgerät (20) durchgeführten Messungen zu verarbeiten,

**dadurch gekennzeichnet, dass** die Kamera hochauflösend monochron ist.

2. Vorrichtung (1) nach Anspruch 1, wobei die multispektrale Beleuchtungseinrichtung acht LEDs aufweist und jede von ihnen ein Licht mit einer präzisen Frequenz im sichtbaren Bereich projiziert.

3. Vorrichtung (1) nach Anspruch 2, wobei die multispektrale Beleuchtungseinrichtung aufweist: UV-Licht, BLAUES Licht, GRÜNES Licht, AMARANTO-Licht, ROTES Licht, INFRAROT-Licht, FERNROTES Licht, WEISSES Licht.

4. Vorrichtung (1) nach einem der vorstehenden Ansprüche, wobei das Messgerät (20) mit vertikalen Bewegungseinrichtungen (91) versehen ist, die eingerichtet sind, es in Bezug auf den Arm (10) entlang einer vertikalen Achse anzuheben und abzusenken, und/oder mit horizontalen Bewegungseinrichtungen (92) versehen ist, die eingerichtet sind, es entlang einer horizontalen Achse näher und weiter weg von dem Arm (10) zu bewegen.

5. Vorrichtung (1) nach einem der vorstehenden Ansprüche, wobei das Messgerät (20) auf einem von dem Rahmen (11) trennbaren Schlitten (9) angeordnet ist.

6. Vorrichtung (1) nach einem der vorstehenden Ansprüche, wobei die Messvorrichtung (20), nachdem die Längserstreckungsachse des Arms (10) definiert (X) wurde, den Messstrahl (21) orthogonal in Bezug auf die Achse (X) projiziert, um die Mittellinie des zylindrischen Abschnitts (53) der Garnrolle zu zentrieren.

7. Vorrichtung (1) nach einem der vorstehenden Ansprüche, welche an dem Arm (10) eine Kraftmesszelle (7) aufweist, die eingerichtet ist, das Gewicht der auf den Arm (10) geladenen Garnrolle (5) zu detektieren.

8. Vorrichtung (1) nach einem der vorstehenden Ansprüche, aufweisend eine Brücke (111), die an dem Rahmen (11) und über dem Arm (10) befestigt ist, mit einer Schiene (112) versehen ist, auf der ein Detektor (40) gleitet, welcher eingerichtet ist, einen Detektionsstrahl auf den Körper (52) der auf den Arm (10) geladenen Garnrolle (5) zu projizieren, um dessen Volumen zu detektieren.

9. Verfahren zur automatischen Steuerung des Farbtons einer Garnrolle, umfassend die Schritte:

- Bereitstellen einer Vorrichtung (1) zur automatischen Steuerung des Farbtons einer Garnrolle nach Anspruch 1;
- Einstellen der Referenzfarbe:
- Laden einer Proben-Garnrolle auf den Arm (10) der Vorrichtung (1) und Projizieren des Messstrahls (21) auf einen zylindrischen Abschnitt (53) der Rolle;
- Detektieren, durch das Messgerät (20), von acht durchschnittlichen Sättigungen, eine für jede Lichtfrequenz:

$S1$ = durchschnittliche Sättigung mit UV-Licht

$S2$ = durchschnittliche Sättigung mit BLAUEM Licht

$S3$ = durchschnittliche Sättigung mit GRÜNEM Licht

$S4$ = durchschnittliche Sättigung mit RÖTLICH-VIOLETTEM Licht

$S5$ = durchschnittliche Sättigung mit ROTEM Licht

$S6$ = durchschnittliche Sättigung mit INFRAROT-Licht

$S7$ = durchschnittliche Sättigung mit FERNROTEM Licht

$S8$ = durchschnittliche Sättigung mit WEISSEM Licht

- Definieren einer "Probenfarbe" des Punktes mit Koordinaten $(S1, S2, S3, S4, S5, S6, S7, S8)$;
- Messen der Farbe der zu analysierenden Rolle (5):
- Laden der zu analysierenden Garnrolle (5) auf den Arm (10) der Vorrichtung (1) und Projizieren des Messstrahls (21) auf einen zylindrischen Abschnitt (53) der Rolle;
- Detektieren, durch das Messgerät (20), von acht durchschnittlichen Sättigungen, eine für jede Lichtfrequenz:

S1 = durchschnittliche Sättigung mit UV-Licht

S2 = durchschnittliche Sättigung mit BLAUEM Licht

S3 = durchschnittliche Sättigung mit GRÜNEM Licht

S4 = durchschnittliche Sättigung mit RÖTLICH VIOLETTEM Licht

S5 = durchschnittliche Sättigung mit ROTEM Licht

S6 = durchschnittliche Sättigung mit INFRAROT-Licht

S7 = durchschnittliche Sättigung mit FERNROTEM Licht

S8 = durchschnittliche Sättigung mit WEISSEM Licht

- Definieren der "Rollenfarbe" des Punktes mit Koordinaten (S1, S2, S3, S4, S5, S6, S7, S8);
- Klassifizieren der Farbe der Rolle als der Abstand des Punktes der "Rollenfarbe" in Bezug auf den Punkt der "Probenfarbe".

10. Verfahren nach Anspruch 9, ferner umfassend den Schritt des Klassifizierens der Garnrolle (5) auf Grundlage von Gewicht, Durchmesser und Dichte, wobei dieser Schritt Folgendes vorsieht:

- Bereitstellen einer Vorrichtung (1) nach Ansprüchen 7 und 8;
- Messen des Gewichts: Messen des Gewichts der auf den Arm (10) geladenen Garnrolle durch die Kraftmesszelle (7), Berechnen des Nettogewichts des Garns durch Subtrahieren des Gewichts der Rolle (55);
- Messen des Volumens: Aktivieren des Detektors (40) Verschieben entlang der Schiene (112), und Aufzeichnen einer Vielzahl von Geometriemessungen der Rolle, Berechnen des Gesamtvolumens der Rolle, Berechnen des Nettovolumens des Garns durch Subtrahieren des Volumens der Rolle (55);
- Messung der Dichte: Berechnen der Dichte des Garns auf Grundlage des zuvor aufgezeichneten Nettogewichts und Nettovolumens.

11. Verfahren nach Anspruch 10, wobei die während der Volumenmessung detektieren Geometriemessungen verwendet werden, um die Fokussierung des Messgeräts (20) und/oder die Zentrierung des Messstrahls (21) in Bezug auf die Achsenmittellinie des zylindrischen Abschnitts (53) der auf den Arm (10) geladenen Garnrolle (5) zu erzielen.

**Revendications**

1. Dispositif pour la commande automatique de la tonalité de couleur d'une bobine de fil, comprenant :

- un cadre (11) qui supporte un bras (10) sur lequel une bobine de fil (5) peut être placée ;
- un dispositif de mesure de couleur (20) apte à projeter un faisceau de mesure (21) sur une partie cylindrique (53) de la bobine de fil (5), ledit dispositif de mesure (20) comprenant une caméra (25) et un illuminateur aligné avec la caméra (25), ledit illuminateur étant multispectral et apte à illuminer la bobine de fil (5) avec différentes longueurs d'onde ;
- un ordinateur pourvu d'un écran (30) avec une interface graphique et relié au dispositif de mesure (20), apte à traiter la classification de la bobine de fil (5) chargée sur le bras (10) sur la base des mesures réalisées par le dispositif de mesure (20),

**caractérisé en ce que** la caméra est monochrome à haute résolution.

2. Dispositif (1) selon la revendication 1, l'illuminateur multispectral comprenant huit DEL, chacune d'elles projetant une lumière à une fréquence précise dans le visible.

3. Dispositif (1) selon la revendication 2, l'illuminateur multispectral projettant : une lumière UV, une lumière BLEUE, une lumière VERTE, une lumière AMARANTE, une lumière ROUGE, une lumière INFRAROUGE, une lumière ROUGE EXTREME, une lumière BLANCHE.

4. Dispositif (1) selon l'une quelconque des revendications précédentes, le dispositif de mesure (20) étant pourvu d'un moyen de déplacement vertical (91), apte à le faire monter et descendre par rapport au bras (10) le long d'un axe vertical, et/ou d'un moyen de déplacement horizontal (92), apte à le rapprocher et l'éloigner du bras (10) le long d'un axe horizontal.

5. Dispositif (1) selon l'une quelconque des revendications précédentes, le dispositif de mesure (20) étant agencé sur un chariot (9) séparable du cadre (11).

6. Dispositif (1) selon l'une quelconque des revendications précédentes, (X) étant défini en tant que l'axe longitudinal de développement du bras (10), le dispositif de mesure (20) projette le faisceau de mesure (21) orthogonalement à l'axe (X), de manière à centrer la ligne centrale de la partie cylindrique (53) de la bobine de fil.

7. Dispositif (1) selon l'une quelconque des revendications précédentes, comprenant, au bras (10), un capteur de pesage (7) apte à détecter le poids de la bobine de fil (5) chargée sur le bras (10).

8. Dispositif (1) selon l'une quelconque des revendications précédentes, comprenant un pont (111), fixé au cadre (11) et au-dessus du bras (10), pourvu d'un rail (112) sur lequel coulisse un détecteur (40), apte à projeter un faisceau de détection sur le corps (52) de la bobine de fil (5) chargée sur le bras (10), pour détecter le volume de celle-ci.

9. Procédé pour la commande automatique de la tonalité de couleur d'une bobine de fil, comprenant les étapes suivantes :

    - la fourniture d'un dispositif (1) pour la commande automatique de la tonalité de couleur d'une bobine de fil, selon la revendication 1 ;
    - le réglage de la couleur de référence ;
    - le chargement d'une bobine de fil d'échantillon sur le bras (10) du dispositif (1) et la projection du faisceau de mesure (21) sur une partie cylindrique (53) de la bobine ;
    - la détection, par l'intermédiaire du dispositif de mesure (20), de huit saturations moyennes, une pour chaque fréquence de lumière :

        S1 = saturation moyenne avec lumière UV
        S2 = saturation moyenne avec lumière BLEUE
        S3 = saturation moyenne avec lumière VERTE
        S4 = saturation moyenne avec lumière ROUGE POURPRE
        S5 = saturation moyenne avec lumière ROUGE
        S6 = saturation moyenne avec lumière INFRAROUGE
        S7 = saturation moyenne avec lumière ROUGE EXTREME
        S8 = saturation moyenne avec lumière BLANCHE

    - la définition d'une « couleur d'échantillon » en tant que le point ayant des coordonnées (S1, S2, S3, S4, S5, S6, S7, S8) ;
    - la mesure de la couleur de la bobine (5) à analyser ;
    - le chargement de la bobine de fil (5) à analyser sur le bras (10) du dispositif (1) et la projection du faisceau de mesure (21) sur une partie cylindrique (53) de la bobine ;
    - la détection, par l'intermédiaire du dispositif de mesure (20), de huit saturations moyennes, une pour chaque fréquence de lumière :

        s 1 = saturation moyenne avec lumière UV
        s2 = saturation moyenne avec lumière BLEUE
        s3 = saturation moyenne avec lumière VERTE
        s4 = saturation moyenne avec lumière ROUGE POURPRE
        s5 = saturation moyenne avec lumière ROUGE
        s6 = saturation moyenne avec lumière INFRAROUGE
        s7 = saturation moyenne avec lumière ROUGE EXTREME
        s8 = saturation moyenne avec lumière BLANCHE

    - la définition d'une « couleur de bobine » en tant que le point ayant des coordonnées (s1, s2, s3, s4, s5, s6, s7, s8) ;
    - la classification de la couleur de la bobine en tant que la distance du point de « couleur de bobine » par rapport au point de « couleur d'échantillon ».

10. Procédé selon la revendication 9, comprenant en outre l'étape de la classification de la bobine de fil (5) sur la base d'un poids, d'un diamètre et d'une densité, cette étape prévoyant :

    - la fourniture d'un dispositif (1) selon les revendications 7 et 8 ;
    - la mesure du poids : la mesure du poids de la bobine de fil chargée sur le bras (10) par l'intermédiaire du capteur de charge (7), le calcul du poids net du fil par la soustraction du poids de la bobine (55) ;
    - la mesure du volume : l'activation du détecteur (40), le coulissement le long du rail (112), et l'enregistrement d'une pluralité de mesures de géométrie de la bobine, le calcul du volume total de la bobine, le calcul du volume net du fil par la soustraction du volume de la bobine (55) ;
    - la mesure de la densité : le calcul de la densité du fil sur la base du poids net et du volume net préalablement enregistrés.

11. Procédé selon la revendication 10, les mesures de géométrie détectées au cours de la mesure de volume étant utilisées pour réaliser la mise au point du dispositif de mesure (20) et/ou le centrage du faisceau de mesure (21) par rapport à la ligne centrale axiale de la partie cylindrique (53) de la bobine de fil (5) chargée sur le bras (10).

FIG.1b

FIG.1a

FIG.2

FIG.3c

FIG.3a

FIG.3b

EP 3 986 818 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5636803 A